# DEMANDE DE BREVET EUROPEEN

(11) **EP 1 504 985 A1**
(43) Date de publication de la demande: **09.02.2005**
(21) Numéro de dépôt: 04291924.1
(22) Date de dépôt: 28.07.2004
(51) Int. Cl.: B62D 25/10, B60R 21/34, B62D 29/00

(54) **Panneau de renfort multifunction d'un capot de vehicule automobile**

(30) Priorité: 04.08.2003 FR 0309606
(71) Demandeur: Centre d'Etude et de Recherche pour l'Automobile ( CERA), 51100 Reims (FR)
(72) Inventeur: Deprez, Alain, 51140 Jonchery-Sur-Vesle (FR)
(74) Mandataire: Geismar, Thierry

(57) **Abrégé**

L'invention concerne un panneau de renfort d'un capot (2) de véhicule automobile, ledit panneau étant caractérisé en ce qu'il comprend une structure rigide (4) en matériau plastique moulé, ladite structure rigide comprenant un réseau de nervures (5), lesdites nervures étant agencées pour être sensiblement perpendiculaires au capot (2) et pour permettre de rigidifier la partie centrale du capot (2), ledit panneau (1) étant pourvu de moyens périphériques de fixation (7) au capot, et eventuellement d'élements aborbeurs de choc (12) ainsi que d'une plaque participant à l'insonorisation acoustique (6) percée d'orifices (10). .

## Description

L'invention concerne un panneau de renfort d'un capot de véhicule automobile permettant de rigidifier la partie centrale du capot, d'absorber une partie de l'énergie due à un choc sur le capot et de fournir une insonorisation acoustique du compartiment moteur du véhicule.

Les panneaux de garniture sous capot sont connus, ils ont généralement une fonction d'isolation acoustique et d'absorption de l'énergie due à un choc. On connaît également les tôles métallique de renfort d'un capot, qui permettent de rigidifier celui-ci afin d'éviter son enfoncement par simple appui sur la surface du capot. On connaît du document FR-2 821 789, un panneau insonorisant structurel associant des couches de matériaux poreux et des éléments de renforts du capot. Un tel panneau permet de rigidifier le capot afin d'éviter un enfoncement de sa partie centrale par simple appui sur la surface du capot.

Cependant, un tel panneau nécessite un procédé de fabrication complexe d'association de matériaux poreux avec des éléments de renforts rigides. De plus, ces panneaux n'ont pas une grande liberté de forme, ce qui ne permet pas d'adapter facilement la rigidité d'un capot en fonction des contraintes de sécurité. Enfin, on peut difficilement intégrer une fonction d'absorption d'énergie efficace en cas de choc avec un piéton, notamment lorsque le choc se produit en regard d'une zone rigide faiblement espacée du capot.

L'invention vise à palier ces inconvénients en proposant un panneau de renfort d'un capot de véhicule automobile réalisé en un matériau plastique permettant d'éviter un enfoncement du capot par simple appui sur sa surface. Un tel panneau présente une structure optimale pour adapter la rigidité du capot aux contraintes de sécurité et permet d'absorber de l'énergie lors d'un choc sur le capot. De plus, il offre une fonction d'isolation acoustique du compartiment moteur.

A cet effet et selon un premier aspect, l'invention concerne un panneau de renfort d'un capot de véhicule automobile, comprenant une structure rigide en matériau plastique moulé, ladite structure comprenant un réseau de nervures, lesdites nervures étant agencées pour être sensiblement perpendiculaires au capot et pour permettre de rigidifier la partie centrale du capot, ledit panneau étant pourvu de moyens périphériques de fixation au capot.

Selon un second aspect, le panneau de renfort comprend des éléments absorbeurs de choc disposés sur la périphérie de la structure rigide et/ou dans sa partie centrale.

De tels éléments, disposés en regard de zones rigides situées sous le capot permettent d'absorber de l'énergie de façon optimale en cas de choc sur le capot en regard de ces zones rigides, notamment lorsque l'espace entre le capot et les zones rigides est faible.

D'autres objets et avantages de l'invention apparaîtront au cours de la description qui suit, faite en référence aux dessins annexés dans lesquels :
La figure 1 est une représentation schématique en coupe partielle d'un panneau de renfort selon l'invention installé sous un capot de véhicule automobile.
La figure 2 est une représentation schématique du panneau de la figure 1 sur lequel sont agencés des éléments absorbeurs de choc.
La figure 3 est une représentation schématique du panneau de la figure 1 selon une variante de réalisation et installé en regard d'une zone rigide située sous le capot.
La figure 4 est une représentation schématique de dessous d'un panneau de renfort selon l'invention installé sous un capot.

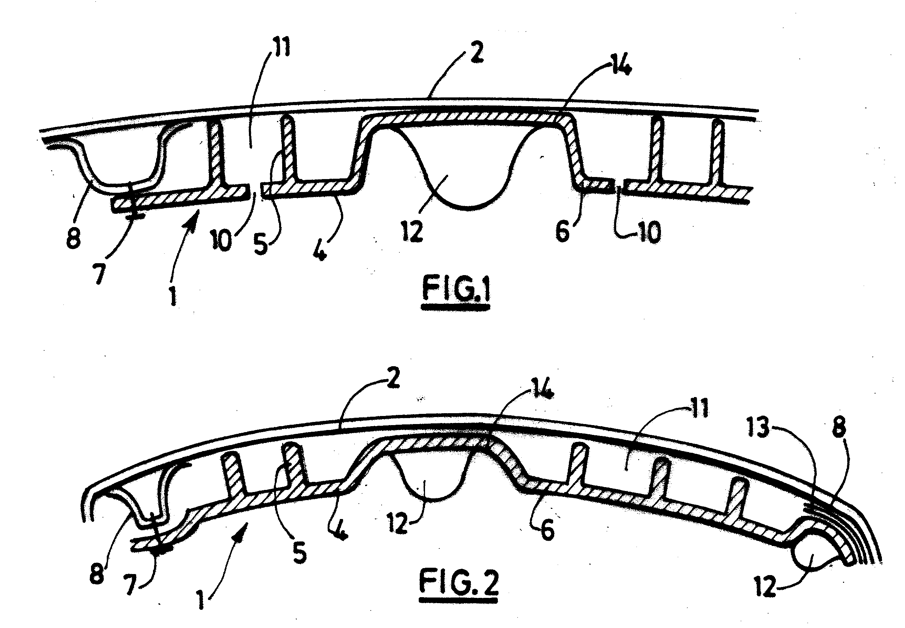

En référence à la figure 1, un panneau de renfort 1 est installé sous un capot 2 de véhicule automobile et s'étend sensiblement sous toute la surface de celui-ci. Un tel panneau est agencé de façon à être en regard de zones rigides 3 situées sous le capot 2, telles que des surfaces d'appui et des éléments saillants du compartiment moteur. On décrit l'ensemble formé par le panneau de renfort 1 et le capot 2.

Le panneau 1 comprend une structure rigide 4 pourvue d'une plaque 6 à partir de laquelle s'étend un réseau de nervures 5. La plaque 6 est agencée sensiblement parallèlement au capot 2 et les nervures 5 s'étendent sensiblement perpendiculairement au capot entre ce dernier et la plaque 6.

Les dimensions des nervures sont adaptées pour qu'elles s'étendent jusqu'au capot en laissant un jeu léger entre l'extrémité libre des nervures 5 et le capot 2. Ce jeu est par exemple d'environ 3 mm. Un tel jeu permet à la structure rigide 4 de reprendre les efforts du capot au plus tôt lors d'un enfoncement du capot par simple appui sur celui-ci tout en absorbant les tolérances de la tôle du capot.

La structure rigide est, par exemple, réalisée en matériau plastique injecté, tel qu'un matériau thermoplastique chargé. Un tel matériau est par exemple du polypropylène ou du polyamide chargé avec des fibres de verre. Le taux de fibres de verre permet d'ajuster la rigidité de la structure rigide 4. On peut ainsi adapter les caractéristiques du panneau de renfort à différents types de capot. Le matériau plastique injecté permet également un gain de masse. On obtient ainsi un panneau de renfort 1 plus léger qu'une tôle de renfort.

En variante, la structure rigide 4 peut également être réalisée par thermoformage ou thermocompression.

On peut encore adapter la rigidité de la structure rigide 4 en définissant le réseau de nervures 5. Pour ce faire, on peut faire varier la forme et la taille des mailles du réseau de nervures 5, en réalisant des nervures qui ne sont pas parallèles entre elles par exemple. On peut également faire varier la forme, la hauteur et l'épaisseur des nervures 5 elles-mêmes et, comme indiqué plus haut, choisir un matériau adapté à la rigidité voulue.

Une telle structure rigide 4 est adaptée pour absorber de l'énergie en cas de choc avec un piéton par exemple. En effet, lors du choc, le capot se déforme vers la structure rigide 4. La structure subit alors une déformation plastique absorbant de l'énergie. Cette déformation peut être suivi d'une ruine du matériau plastique et d'une fissuration de la structure rigide 4 en petits morceaux. Cette ruine et cette fissuration absorbent de l'énergie et permettent de limiter la hauteur de matière incompressible en fin de déformation du capot. Plus cette hauteur est faible, plus le capot sera apte à poursuivre sa déformation et absorber ainsi de l'énergie.

La structure rigide étant réalisée en matériau plastique moulé, on peut aisément adapter celle-ci de façon à pouvoir faire varier la rigidité des différentes zones du capot. Ainsi, on peut par exemple adapter la rigidité de la partie avant du capot aux contraintes de sécurité en cas de choc avec un enfant et modifier cette rigidité dans une zone du capot plus proche du pare-brise pour la protection d'un adulte en cas de choc.

Le panneau 1 est destiné à être fixé sous le capot 2, tout en laissant un jeu entre celui-ci et l'extrémité libre des nervures 5. Pour ce faire, on fixe le panneau 1 au niveau de sa périphérie par des moyens de fixation 7 coopérant avec une doublure 8 de capot périphérique, comme représenté sur les figures 1 et 2. La doublure 8 périphérique est par exemple un profilé métallique fixé sous le capot autour de sa périphérie ou d'une partie de celle-ci. Le profilé présente par exemple une section sensiblement en forme de U. Les moyens de fixations périphériques 7 sont par exemple des clips disposés sur la périphérie du panneau 1 et pénétrant dans des orifices prévus dans la doublure 8.

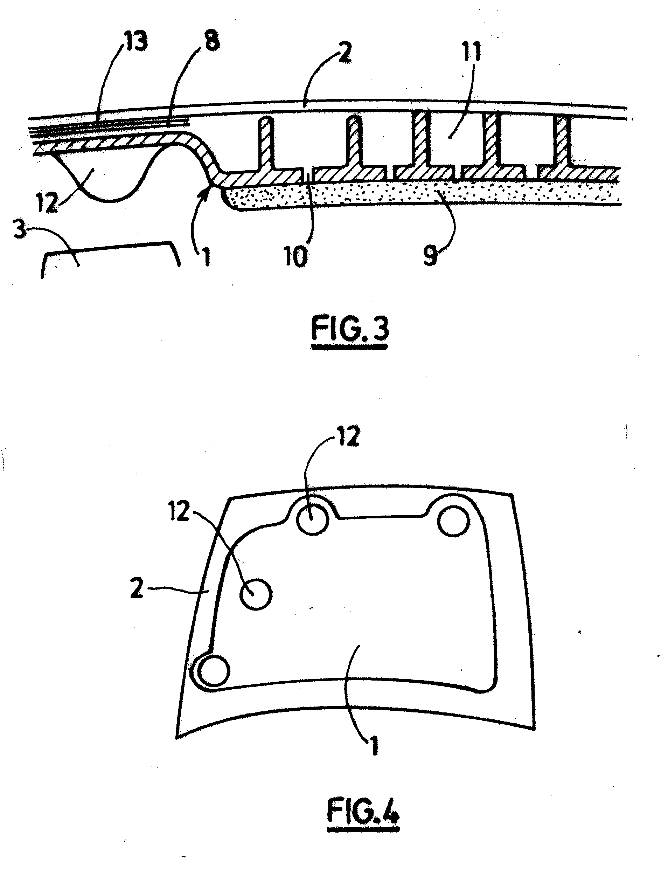

Le panneau 1 est prévu pour répondre à des besoins d'isolation acoustique du compartiment moteur. Pour ce faire, on peut prévoir de disposer une couche 9 de matériau d'absorption acoustique solidaire de la structure rigide 4, par fixation sous la plaque 6, et disposée en regard du compartiment moteur du véhicule automobile, comme représenté sur la figure 3. Cette couche 9 est par exemple un feutre.

De plus, la plaque 6 peut être munie d'orifices 10, chacun disposé, par exemple, entre deux nervures successives, comme représenté sur les figures 1 et 3. Ces orifices 10 débouchent donc, d'une part, sur la couche 9 de matériau d'absorption acoustique et, d'autre part, dans les cavités 11 réalisées entre les nervures 5, la plaque 6 et le capot 2.

Ainsi, les ondes acoustiques en provenance du compartiment moteur et se dirigeant vers le capot traversent d'abord la couche de matériau d'absorption acoustique où une partie d'entre elles est absorbée. Une autre partie des ondes est réfléchie sur la plaque 6 et renvoyée dans la couche 9 où elle est absorbée. Enfin, une dernière partie traverse les orifices 10 et atteint les cavités 11. Il se produit des phénomènes acoustiques du type résonateur de Helmoltz dans les cavités 11. C'est à dire que les ondes acoustiques sont réfléchies successivement sur les parois des cavités 11 sans pouvoir passer au-delà du capot 2. Il se produit également des phénomènes du type ¼ d'onde au moment du passage des ondes dans les orifices 10.

Selon une réalisation, le panneau 1 est adapté pour être installé sous un capot 2 lorsque l'espace entre le capot et les zones rigides 3 en regard de ce capot est faible, par exemple inférieur à 70 mm. Ce faible espace entre le capot et les zones rigides situées en dessous présente un inconvénient en cas de choc d'un piéton sur le capot. En effet, comme indiqué plus haut, la structure rigide 4 peut absorber de l'énergie par déformation plastique et ruine du matériau plastique ; or, une zone rigide 3, située à faible distance de la structure rigide 4, peut arrêter cette déformation et ainsi limiter l'absorption d'énergie. Ce phénomène peut entraîner de graves lésions pour le piéton sur lequel se répercute l'énergie du choc qui n'est pas absorbée.

Pour palier cet inconvénient, l'invention propose d'intégrer des éléments absorbeurs de choc 12 au panneau 1, en regard des zones rigides 3 situées sous le capot, comme représenté sur les figures 1 à 4.

Ces éléments absorbeurs de choc sont aptes à absorber de l'énergie due à un choc par déformation plastique et éventuellement rupture sous l'effet d'une force appliquée sur la surface du capot 1 en regard des zones rigides 3.

Selon une réalisation, les éléments 12 comprennent des blocs de matériau cellulaire tel qu'une mousse de polyuréthanne ou de polyoléfine ou une mousse métallique apte à dissiper l'énergie par compression et rupture.

Selon une autre réalisation, ils comprennent un matériau compact présentant une structure agencée pour favoriser la dissipation d'énergie, telle qu'un nid d'abeilles ou un jeu de nervures ou un agencement particulier tel qu'un jeu de cônes tronqués.

En variante, les éléments absorbeurs de choc 12 peuvent comprendre un stratifié. Ce stratifié comprend plusieurs couches de matériau compact superposées les unes aux autres et assemblées soit de façon continue, soit de façon discrète par collage ou soudage par exemple. En cas de choc avec un piéton, une partie de la dissipation d'énergie provient du délaminage du stratifié formant les éléments 12, les couches glissent les unes par rapport aux autres en rompant les liaisons qu'elles ont entre elles. La dissipation de l'énergie se fait donc dans un sens perpendiculaire à celui du choc, ce qui permet une dissipation nécessitant moins de place que dans le cas d'une dissipation par compression.

De tels éléments 12 peuvent être agencés sur la périphérie de la structure rigide 4, par exemple en regard de surfaces d'appui du capot 2 ainsi que cela est représenté sur les figures 2, 3 et 4.

On peut envisager de réaliser les éléments 12 en une seule pièce continue s'étendant sous la périphérie de la structure rigide 4. Un seul élément 12 est alors suffisant pour protéger toute la périphérie du capot 2. On peut également envisager de réaliser ces éléments en plusieurs pièces s'étendant chacune le long d'un bord de la structure rigide 4.

Dans les réalisations représentées sur les figures, les éléments 12 sont des éléments discrets, tels que des plots par exemple. Les plots ont par exemple une forme de « cône creux ». Ils peuvent être régulièrement disposés sur la périphérie de la structure rigide 4, en regard de la doublure périphérique 8 du capot. La doublure comprend alors des renfoncements locaux 13 en regard des éléments absorbeurs de choc 12, ainsi que cela est représenté sur les figures 2 et 3. Ces renfoncements sont par exemple réalisés par emboutissage de la doublure 8. Les plots logent alors aisément entre la structure rigide 4 et les zones rigides 3 disposées en regard.

Les plots sont par exemple réalisés en matériau thermoplastique et sont aptes à se comprimer et à se rompre, en absorbant de l'énergie, sous l'effet d'un impact sur le capot provoquant sa déformation. Afin d'améliorer l'absorption d'énergie lors de la déformation d'un plot, on peut remplir celui-ci d'une mousse absorbant de l'énergie lors de sa compression.

Selon une réalisation représentée sur les figures 1, 2 et 4, on dispose au moins un élément absorbeur de choc 12 dans la partie centrale du panneau 1. De tels éléments permettent d'absorber de l'énergie en cas de choc sur le capot en regard du compartiment moteur. On peut choisir l'emplacement des éléments absorbeurs de choc 12 de sorte qu'ils se trouvent en regard de toutes les zones rigides situées sous le capot 2.

Comme représenté sur les figures 1 et 2, pour agencer un élément absorbeur de choc 12 dans la partie centrale du panneau 1, on peut réaliser un renfoncement 14 dans la plaque 6, dans lequel est disposé un élément absorbeur de choc. Un tel renfoncement 14 permet de libérer de l'espace entre la plaque 6 et les zones rigides 3 afin de loger l'élément absorbeur de choc 12.

Les éléments absorbeurs de choc 12 peuvent être fixés par collage sur la plaque 6. Avantageusement, ces éléments sont surmoulés sur la plaque lors de la réalisation de la structure rigide 4. Les éléments 12 sont alors formés d'une seule pièce avec la structure rigide 4.

## Revendications

1. Panneau de renfort d'un capot (2) de véhicule automobile, ledit panneau étant **caractérisé en ce qu'**il comprend une structure rigide (4) en matériau plastique moulé, ladite structure rigide comprenant un réseau de nervures (5), lesdites nervures étant agencées pour être sensiblement perpendiculaires au capot (2) et pour permettre de rigidifier la partie centrale du capot (2), ledit panneau (1) étant pourvu de moyens périphériques de fixation (7) au capot.

2. Panneau de renfort selon la revendication 1, **caractérisé en ce que** la structure rigide (4) est réalisé en un matériau plastique chargé, tel que du polypropylène ou du polyamide chargé avec des fibres de verre.

3. Panneau de renfort selon la revendication 1 ou 2, **caractérisé en ce que** la structure rigide (4) est agencée pour conférer une rigidité variable au capot selon ses différentes zones.

4. Panneau de renfort selon la revendication 1 à 3, **caractérisé en ce que** les moyens de fixation périphériques (7) sont destinés à coopérer avec une doublure (8) de capot périphérique.

5. Panneau de renfort selon la revendication 4, **caractérisé en ce que** la doublure (8) périphérique est un profilé fixé à la périphérie du capot (2).

6. Panneau de renfort selon l'une des revendications 1 à 5, **caractérisé en ce qu'**il comprend en outre une couche (9) de matériau d'absorption acoustique solidaire de la structure rigide (4) et destinée à être disposée en regard du compartiment moteur du véhicule automobile.

7. Panneau de renfort selon l'une des revendications 1 à 6, **caractérisé en ce que** le réseau de nervures (5) est solidaire d'une plaque (6) destinée à être disposée sensiblement parallèlement au capot.

8. Panneau de renfort selon la revendication 7, **caractérisé en ce que** les nervures (5) sont destinées à s'étendre de la plaque (6) jusqu'au capot (2) avec un jeu entre l'extrémité libre des nervures et le capot (2).

9. Panneau de renfort selon l'une des revendications 7 ou 8 lorsqu'elles dépendent de la revendication 6, **caractérisé en ce que** la plaque (6) comprend des orifices (10), disposés en regard de la couche de matériau d'absorption (9) et laissant passer l'air dans les espaces situés entre les nervures (5).

10. Panneau de renfort selon l'une des revendications 1 à 9, **caractérisé en ce qu'**il comprend en outre des éléments absorbeurs de choc (12), lesdits éléments étant disposés sur la périphérie de la structure rigide (4).

11. Panneau de renfort selon la revendication 10, **caractérisé en ce que** les éléments absorbeurs de choc (12) sont réalisés en une seule pièce s'étendant le long d'au moins une partie de la périphérie de la structure rigide (4).

12. Panneau de renfort selon l'une des revendications 1 à 11, **caractérisé en ce qu'**il comprend au moins un élément absorbeur de choc (12) fixé dans la partie centrale de la plaque (6) de la structure rigide (4) et destiné à être disposé en regard du compartiment moteur.

13. Panneau de renfort selon l'une des revendications 10 ou 12, **caractérisé en ce que** les éléments absorbeurs de choc (12) sont des éléments discrets tels que des plots.

14. Panneau de renfort selon la revendication 13, **caractérisé en ce que** les éléments absorbeurs de choc (12) sont destinés à être disposés en regard de renfoncements (13) locaux de la doublure (8) de capot périphérique.

15. Panneau de renfort selon l'une des revendications 10 à 14, **caractérisé en ce que** les éléments absorbeurs de choc (12) comprennent des blocs de matériau cellulaire, tel qu'une mousse de polyuréthanne ou de polyoléfine ou une mousse métallique apte à dissiper l'énergie par compression.

16. Panneau de renfort selon l'une des revendications 10 à 14, **caractérisé en ce que** les éléments absorbeurs de choc (12) comprennent un matériau compact présentant une structure agencée pour favoriser la dissipation d'énergie, telle qu'un nid d'abeilles ou un jeu de nervures, ou un agencement particulier tel qu'un « cône creux ».

17. Panneau de renfort selon l'une des revendications 10 à 14, **caractérisé en ce que** les éléments absorbeurs de choc (12) comprennent un stratifié, formé de l'assemblage de plusieurs couches superposées, apte à dissiper l'énergie par délaminage.

18. Panneau de renfort selon l'une des revendications 10 à 17, **caractérisé en ce que** les éléments absorbeurs de choc (12) sont formés d'une seule pièce avec la structure rigide (4).
